# EUROPEAN PATENT APPLICATION

(11) **EP 2 096 898 A1**
(43) Date of publication of application: **02.09.2009**
(21) Application number: 08425127.1
(22) Date of filing: 29.02.2008
(51) Int. Cl.: H05B 33/08, H05B 37/03, B60Q 11/00

(54) **Led lighting system for vehicles with control and diagnosis device**

(71) Applicant: Magneti Marelli Sistemi Elettronici S.p.A., 20011 Corbetta (Milano) (IT)
(72) Inventor: Bergamini, Alessandro, 10078 Venaria Reale (IT)
(74) Representative: Maccagnan, Matteo

(57) **Abstract**

There is described a lighting system (1) for vehicles, including a lighting device (2a,2b,2c,2d) including at least one light-emitting diode (4) and a control device (6) of said lighting device (2a,2b,2c,2d); **characterized in that** the control device (6) is configured to diagnose the operation of the lighting device (2a,2b,2c,2d) and to control the lighting device (2a,2b,2c,2d) on the basis of a result of the operation diagnosis.

## Description

The present invention relates to a LED lighting system for vehicles, including a LED control and diagnosis device.

It is known that light-emitting diodes (LEDs) are widely used in the automotive field for making lighting devices such as, for example, the headlights and rear lights of the vehicle, because they offer a plurality of advantages with respect to the traditional light sources. As a matter of fact, in addition to a low energy consumption which minimally weighs on the overall energy balance of the engine, LEDs are considerably more durable than normal incandescent light bulbs, are particularly reliable and rugged, and give car manufacturers more freedom in creating the design of the vehicle components which require the use of a light source.

Generally, the LEDs are voltage driven by means of a specific control device fed by the vehicle battery. Specifically, in order to obtain the desired degree of brightness, it is known to reciprocally connect a plurality of LEDs in series and to create branches of LEDs, each crossed by a specific current controlled by the aforesaid control device.

The main disadvantage deriving from making a lighting devices by means of LEDs is related above all to the difficulty of accurately identifying possibly damaged LEDs which cause the malfunction of the lighting device, and of exactly diagnosing the type of failure of the faulty LEDs.

The impossibility of exactly identifying which branch or which LEDs in one or more of the branches are actually damaged, and the incapacity of exactly determining the type of failure which concerns a certain branch implies the inevitable replacement of the whole lighting device, even if the malfunction of the lighting device is caused by the breakage of only one LED. In such a case, the replacement of the whole lighting device is particularly inconvenient because it would be sufficient to replace the faulty LED, or alternatively the whole branch to which it belongs, to restore the complete operation of the lighting device and to reduce costs.

It is therefore felt the need to make a LED lighting system for vehicles capable of accurately driving the LED branches and of accurately diagnosing the operation of the LEDs and/or of the LED branches, so as to identify possible malfunctions of the LEDs and/or of the LED branches and to automatically recognize the type of failure or malfunction of the LEDs and/or the branches, and to control the feeding of the LEDs on the basis of the results of the diagnosis.

It is the object of the present invention to make a LED lighting system for vehicles including a control and diagnosis device of the LEDs, which allows to overcome the aforesaid drawbacks.

According to the present invention a LED lighting system for vehicles, including a LED control and diagnosis device, is made as defined in the appended claims.

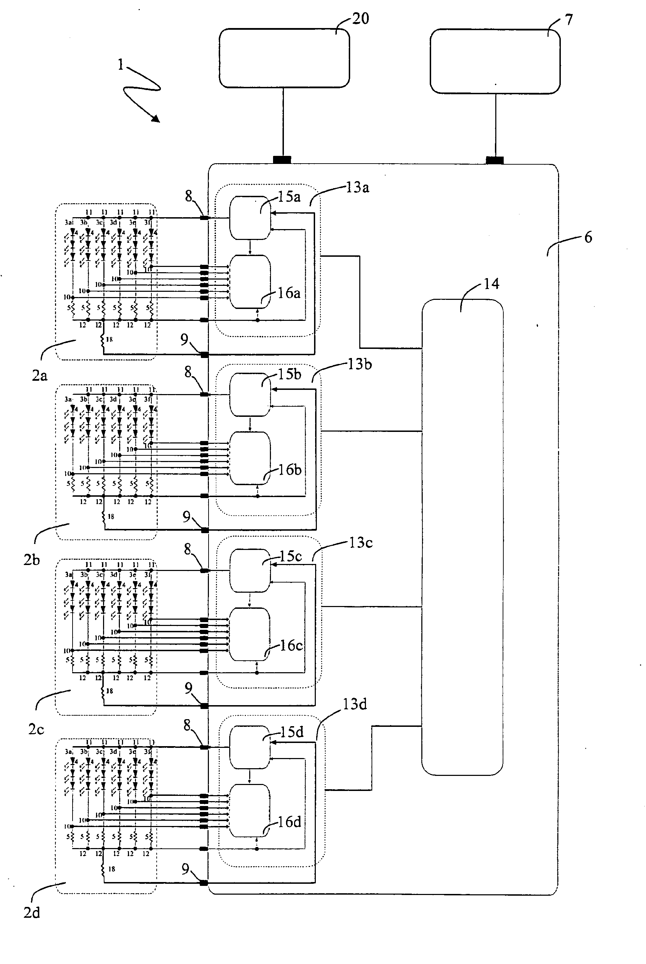

For a better understanding of the present invention, it will now be described a preferred embodiment only by way of non-limitative example, and with reference to the accompanying drawing, which shows a block diagram of a LED lighting system for vehicles, made according to the invention.

In the figure, numeral 1 indicates a block diagram of a LED lighting system for vehicles including:
- a plurality of lighting devices 2, e.g. four lighting devices 2a, 2b, 2c and 2d, each including at least one branch 3, including at least one LED 4 connected in series to a resistor 5, e.g. six branches 3a, 3b, 3c, 3d, 3e, and 3f of LEDs 4 connected in parallel to each other and each including three LEDs 4 connected in series to each other and to the resistor 5; and
- a driving and diagnosis device 6, connected to the lighting devices 2a, 2b, 2c and 2d, to a feeding device 7, e.g. the battery of the vehicle or other feeding voltage adjustment unit, and to at least one activation and deactivation device 20 of operative modes of the lighting devices 2.

Specifically, as shown in the figure, each lighting device 2 is connected to the driving and diagnosis device 6 by means of a feeding input 8 and a feeding output 9 adapted to make a feeding current supplied by the driving and diagnosis device 6 circulate between each branch 3 of the lighting device 2 and the driving and diagnosis device 6.

Furthermore, each lighting device 2 is provided with a diagnosis output 10 for each branch 3 arranged downstream of the LEDs and upstream of the resistor 5 and connected to the driving and diagnosis device 6, adapted to supply a voltage *V_{R}* to the driving and diagnosis device 6 at the terminals of the resistor 5 of the branch 3.

In detail, again with reference to the figure, each branch 3 displays an input terminal 11 connected to the feeding input 8 and an output terminal 12 connected to the feeding output 9 of the lighting device 2 by means of a resistor 18 which is dimensioned according to the intensity of the feeding current of the branches 3.

Specifically, the driving and diagnosis device 6 of the LEDs includes:
- a driving and diagnosis assembly 13 for each lighting device 2, e.g. four driving and diagnosis assemblies 13a, 13b, 13c, and 13d which, respectively, drive and diagnose the operation of the branches 3 and/or of the LEDs 4 of the lighting devices 2a, 2b, 2c and 2d; and
- a logic control unit 14 communicating with each driving and diagnosis assembly 13, and configured to control the driving and diagnosis assemblies 13a, 13b, 13c, and 13d.

Specifically, the logic control unit 14 is configured for:
- receiving a control signal *S_{com}* from the activation and deactivation device 20 when the system 1 is switched on,
- transmitting to the driving and diagnosis assemblies 13a, 13b, 13c, and 13d a control signal *S_{ctrl}* containing configuration parameters and/or information related to branch feeding control modes, e.g. the value of the feeding voltage and/or intensity of the feeding current to be sent to the branches 3a, 3b, 3c, 3d, 3e and 3f of the lighting devices 2a, 2b, 2c and 2d,
- receiving from the driving and diagnosis assemblies 13a, 13b, 13c, and 13d and outputting information related to an operation diagnosis of the branches 3 and/or of the LEDs 4 of the lighting devices 2a, 2b, 2c and 2d.

For the sake of simplicity of description, only the driving and diagnosis assembly 13a of the lighting device 2a will be described below, although the remaining driving and diagnosis assemblies 13b, 13c, and 13d of the corresponding lighting devices 2b, 2c and 2d display the same features and work likewise the assembly 13a described below.

As shown in the figure, the driving and diagnosis assembly 13a includes:
- an electronic driving unit 15a, connected to the lighting device 2a by means of the feeding input 8 and the input terminal 11; and
- an electronic control unit 16a, connected to the electronic driving unit 15a and to the lighting device 2a by means of the feeding output 9 and the output terminal 12 and by means of the diagnosis outputs 10, and configured to indicatively diagnose the operation of each branch 3a, 3b, 3c, 3d, 3e and 3f and/or of the LEDs 4 of each branch according to a value of a voltage *V_{R}* at the terminals of the resistor 5 of each of the branches 3a, 3b, 3c, 3d, 3e and 3f.

Specifically, the electronic driving unit 15a is configured to receive the input control signal *S_{ctrl}* from the logic control unit 14 when the system 1 is switched on, to receive information related to the operation diagnosis of each branch 3 from the electronic processing unit 16a, and to control on the basis of the control signal *S_{ctrl}* and/or of the information related to the operation diagnosis of each branch 3, the feeding of the branches 3a, 3b, 3c, 3d, 3e, and 3f, e.g. either by sending a feeding current which crosses each of the branches in order to light up the LEDs 4 and make the lighting device 2a emit the desired light intensity, or by interrupting the feeding of the current, or by continuing to feed the branches if a failure in one or more branches is detected.

For this purpose, in a step of configuring the driving and diagnosis assembly 6 there are stored:
- in the logic control unit 14, a plurality of information, e.g. in the form of tables, related to levels of light intensity of the lighting device 2a associated to a control signal from the activation and deactivation device of the lighting devices 2, and to driving modes of each branch 3, e.g. branch on or branch off, the current intensity *I* with which each branch 3 of the lighting device 2a must be driven in order that the lighting device 2 emits the light intensity associated to the control signal from the activation and deactivation device, etc; and
- in the electronic driving unit 15a, a plurality of information related to feeding control modes of the lighting device 2a associated to a malfunction of the branches 3a, 3b, 3c, 3d, 3e and 3f, e.g. interruption of the feeding voltage in case of short-circuit or reduction of the feeding voltage in case of open circuit.

The electronic processing unit 16a is configured to indicatively diagnose the operation of each branch 3a, 3b, 3c, 3d, 3e and 3f and/or of the LEDs 4 of each branch 4, on the basis of a comparison between the voltage *V_{R}* at the terminals of the resistor 5 of each branch 3a, 3b, 3c, 3d, 3e and 3f and a threshold value *V_{R1}* of the voltage *V_{R}*, which indicates a normal absorption of current by the branch 3a and the regular operation of the LEDs 4 stored in the electronic processing unit 16a during a step of configuring the driving and diagnosis device 6. Specifically, the operation diagnosis of each branch 3a, 3b, 3c, 3d, 3e and 3f and/or of the LEDs 4 is performed in the following manner.

The electronic control unit 16a measures the voltage *V_{R}* at the terminals of the resistor 5 of each of the branches 3a, 3b, 3c, 3d, 3e and 3f, compares it with the threshold value *V_{R1}*, assigns to each measured voltage value *V_{R}* a binary value "1" or "0" on the basis of the result of such a comparison, generates a bit stream *S_{bit}* on the basis of the binary values assigned to the measured voltages *V_{R}*, and analyses the bit stream in order to determine the correct operation or a malfunction of each branch 3.

For this purpose, the electronic processing unit 16a might be configured, for example, to assign the binary value "1" to the voltage *V_{R}* if it is higher than or equal to the threshold value *V_{R1}*, or the binary value "0" if it is lower than the threshold value *V_{R1}*.

In such a case the electronic processing unit 16a determines:
- the correct operation of the lighting device 2a, if the bit stream is equal to "111111", indicating that the voltage value *V_{R}* at the terminals of each resistor 5 of the branches 3a, 3b, 3c, 3d, 3e and 3f is higher than or equal to the threshold value *V_{R1}*; and that all the LEDs 4 of the branches 3a, 3b, 3c, 3d, 3e and 3f are operating correctly;
- a malfunction of the lighting device 2a, due to the presence of an open circuit in at least one of the branches 3a, 3b, 3c, 3d, 3e and 3f, if in the bit stream there is at least one "0", indicating the lack of current in one of the branches 3a, 3b, 3c, 3d, 3e and 3f, but the number of "1s" in the sequence is higher than the number of "0s", e.g. "101011", indicating the presence of an open circuit in branch 3b; or
- a malfunction of the lighting device 2a, due to the presence of a short-circuit in one of the branches 3a, 3b, 3c, 3d, 3e and 3f, if in the bit stream there is only a "1" and all the other bits are equal to "0", e.g. "001000", indicating the presence of a short-circuit in the branch 3c.

As a matter of fact, when a short-circuit occurs in the branch 3c, the voltage *V_{R}* at the terminals of the resistor 5 of the branches 3a, 3b, 3c, 3d, 3e and 3f considerably decreases and drops underneath the threshold value *V_{R1}*, because the feeding current tends to pass nearly totally through the damaged branch 3c, the resistance of which is lower than that of the branches 3a, 3b, 3c, 3d, 3e and 3f.

The electronic processing unit 16a thus supplies the electronic driving unit 15a with a diagnosis signal *S_{dgn}* containing the information related to the diagnosis of the operation of the branches 3 and/or of the LEDs 4. The electronic driving unit 15a thus controls the feeding of the lighting device 2a on the basis of the diagnosis signal *S_{dgn}* and of the control modes of the feeding of the lighting device 2a in case of malfunction of the branches 3a, 3b, 3c, 3d, 3e and 3f.

The electronic driving unit 15a may be configured, for example, to either interrupt the feeding voltage or continue to normally feed the lighting device 2a if a short-circuit or open circuit is detected, or to interrupt the feeding voltage of the lighting device 2a if a short-circuit is detected and to reduce the feeding voltage or continue to normally feed the lighting device 2a if the presence of an open circuit is detected or vice versa.

The electronic processing unit 16a may be made, for example, either by means of the comparing circuits of known type or by means of a microprocessor.

Preferably, the driving and diagnosis device 6 is made in the form of an integrated circuit and each lighting device 2 is arranged to be able to be connected directly to the driving and diagnosis device 6.

The driving and diagnosis system of the invention allows to accurately diagnose the operation of the branches, or of the single LEDs if each branch includes a single LED, and to exactly identify the type of failure which may occur in each branch.

It is finally apparent that changes and variations can be made to the device described and illustrated without departing from the scope of protection of the present invention, as set forth in the appended claims.

## Claims

1. A lighting system (1) for vehicles, including:
- a lighting device (2a,2b,2c,2d) including at least one light-emitting diode (4); and
- a control device (6) of said lighting device (2a,2b,2c,2d);
**characterized in that** said control device (6) is configured to diagnose the operation of said lighting device (2a,2b,2c,2d) and to control said lighting device (2a,2b,2c,2d) on the basis of a result of said operation diagnosis.

2. A system (1) according to claim 1, wherein said control device (6) includes:
- electronic control and diagnosis means (13a,13b,13c,13d) of said lighting device (2a,2b,2c,2d) configured for feeding and for diagnosing the operation of said lighting device (2a,2b,2c,2d); and
- electronic processing and control means (14) connected to said electronic driving and diagnosis means (13a, 13b, 13c, and 13d), configured for receiving an input control signal (*S_{com}*) from at least one activation and deactivation device (20) of operative modes of said lighting device (2) and to supply to said electronic control and diagnosis means (13a, 13b, 13c, and 13d) a control signal (*S_{ctrl}*) of first feeding modes of said lighting device (2).

3. A system (1) according to claim 2, wherein said electronic control and diagnosis means (13a,13b,13c,13d) are configured to supply a feeding voltage and/or current to said light-emitting diode (4) of said lighting device (2a,2b,2c,2d) on the basis of said control signal (*S_{ctrl}*) and/or on the basis of said operation diagnosis (*S_{dgn}*) of said lighting device (2a, 2b, 2c, 2d) .

4. A system (1) according to claim 3, wherein:
said lighting device (2a, 2b, 2c, 2d) includes resistive means (5) connected to said light-emitting diode (4) and wherein said electronic control and diagnosis means (13a,13b,13c,13d) are configured to measure a voltage *(V_{R}*) at the terminals of said resistive means (5) and to diagnose the operation of said lighting device (2a,2b,2c,2d) on the basis of said voltage *(V_{R}*)*.*

5. A system (1) according to any one of the preceding claims, wherein said lighting device (2a,2b,2c,2d) includes a plurality of branches (3a, 3b, 3c, 3d, 3e, 3f) of light-emitting diodes (4), said branches each including at least one light-emitting diode (4) connected in series to one of said resistive means (5), and wherein said electronic control and diagnosis means (13a,13b,13c,13d) are configured for:
- measuring said voltage *(V_{R}*) at the terminals of said resistive means (5) of each of said branches (3a, 3b, 3c, 3d, 3e, 3f);
- comparing each of said measured voltages *(V_{R}*) with a predetermined threshold value *(V_{R1}*);
- generating, on the basis of said comparison, a magnitude (*S_{bit}*) containing information related to the operation of each of said branches (3a, 3b, 3c, 3d, 3e, 3f); and
- determining a correct operation or a malfunction of each of said branches (3a, 3b, 3c, 3d, 3e, 3f) on the basis of said magnitude.

6. A system (1) according to claim 5, wherein generating said magnitude (*S_{bit}*) containing information related to the operation of each of said branches (3a, 3b, 3c, 3d, 3e, 3f) includes:
- associating a first index ("1") to each measured voltage *(V_{R}*) which is higher than or equal to said predetermined threshold value *(V_{R1}*);
- associating a second index ("0") to each measured voltage *(V_{R}*) which is lower than said predetermined threshold value *(V_{R1}*); and
- generating said magnitude (*S_{bit}*) on the basis of said first and second index.

7. A system (1) according to claims 5 and 6, wherein said electronic control and diagnosis means (13a,13b,13c,13d) are configured to determine:
- a correct operation of said branches (3a, 3b, 3c, 3d, 3e, 3f) if said magnitude (*S_{bit}*) exclusively includes a plurality of said first index ("1"); or
- a malfunction of said lighting device (2a,2b,2c,2d) due to the presence of short-circuit in one of said branches (3a,3b,3c,3d,3e,3f), if said magnitude includes only one first index ("1"); or
- a malfunction of said lighting device (2a,2b,2c,2d) due to the presence of an open circuit in at least one of said branches (3a, 3b, 3c, 3d, 3e e 3f), if said magnitude includes said first ("1") and second ("0") index with a majority of said first index ("1").

8. A system (1) according to claim 7, wherein said electronic control and diagnosis means (13a,13b,13c,13d) are configured for:
- either interrupting or continuing the feeding of said lighting device (2a,2b,2c,2d) if a malfunction of said lighting device (2a,2b,2c,2d) is determined, due to the presence of a short-circuit in one of said branches (3a,3b,3c,3d,3e,3f) or to the presence of an open circuit in at least one of said branches (3a, 3b, 3c, 3d, 3e e 3f); or
- interrupting the feeding of said lighting device (2a,2b,2c,2d) if a malfunction of said lighting device (2a,2b,2c,2d) is determined, due to the presence of a short-circuit and either reducing the feeding voltage or continuing to normally feed said lighting device (2a,2b,2c,2d) if a malfunction of said lighting device (2a,2b,2c,2d) is determined, due to the presence of an open circuit in one of said branches (3a,3b,3c,3d,3e,3f); or
- interrupting the feeding of said lighting device (2a,2b,2c,2d) if a malfunction of said lighting device (2a,2b,2c,2d) is determined, due to the presence of an open circuit and either reducing the feeding voltage or continuing to normally feed said lighting device (2a,2b,2c,2d) if a malfunction of said lighting device (2a,2b,2c,2d) is determined, due to the presence of a short-circuit in one of said branches (3a,3b,3c,3d,3e,3f).
